# EUROPÄISCHE PATENTSCHRIFT

(11) **EP 0 407 758 B1**
(45) Veröffentlichungstag und Bekanntmachung des Hinweises auf die Patenterteilung: **27.04.1994**
(21) Anmeldenummer: 90111316.7
(22) Anmeldetag: 15.06.1990
(51) Int. Cl.: B60H 1/00

(54) **Verfahren zum Belüften eines Innenraums eines Kraftfahrzeugs**
Procedure for ventilating the interior of a vehicle
Procédé d'aération de l'habitacle d'un véhicule automobile

(30) Priorität: 12.07.1989 DE 3922941
(43) Veröffentlichungstag der Anmeldung: 16.01.1991
(73) Patentinhaber: Webasto AG Fahrzeugtechnik, D-82131 Stockdorf (DE)
(72) Erfinder: Wissler, Thomas, D-8000 München 2 (DE)

(56) Entgegenhaltungen:
- EP-A- 0 004 970
- US-A- 4 867 047
- PATENT ABSTRACTS OF JAPAN vol. 7, no. 24 (M-189)(1169)29. Januar 1983 & JP-A-57 178 928 ( DAIKIYOU K.K. ) 4. November 1982
- PATENT ABSTRACTS OF JAPAN vol. 7, no. 24 (M-189)(1169)
- 29. Januar 1983 & JP-A-57 178 927 ( DAIKIYOU K.K. ) 4. November 1982
- PATENT ABSTRACTS OF JAPAN vol. 13, no. 193 (M-822)(3541)9. Mai 1989 & JP-A-1 018 716 ( NISSAN MOTOR CO.,LTD. ) 23. Januar 1989

## Beschreibung

Die Erfindung bezieht sich auf ein Verfahren zum Belüften eines Innenraums eines Kraftfahrzeugs, welches eine Belüftungseinrichtung und wenigstens eine mit Hilfe einer Betätigungseinrichtung öffen- und schließbare Dachöffnung aufweist.

Aus DE-A-33 24 107 ist eine Betätigungseinrichtung für bewegbare Teile zum wahlweisen Schließen oder Freigeben von Öffnungen, insbesondere für Schiebedächer und Schiebe-Hebedächer von Kraftfahrzeugen bekannt. Die Auslegung ist hierbei derart getroffen, daß bei der Betätigungseinrichtung lediglich das Betätigungsglied in eine der Sollstellung des bewegbaren Teils entsprechende Stellung gebracht zu werden braucht. Über einen Regelkreis wird dann der Antrieb selbsttätig veranlaßt, das bewegbare Teil in die Sollstellung zu bringen und dort stillzusetzen, ohne daß das bewegbare Teil selbst durch den Fahrer beispielsweise beobachtet zu werden braucht. Die dort beschriebenen Ausführungsformen umfassen eine Betätigungseinrichtung, die einen Sollwertgeber aufweist, mittels dem eine bestimmte Stellung des bewegbaren Teils vorwählbar ist, und daß ferner ein Regelkreis vorgesehen ist, der die Iststellung des bewegbaren Teils mit der Sollstellung vergleicht und das bewegbare Teil so lange antreibt, bis die Stellung gleich der Sollstellung ist.

Ferner ist üblicherweise bei einem Kraftfahrzeug eine Belüftungseinrichtung vorgesehen, mittels der Frischluft oder klimatisierte Luft in den Fahrgastraum eingeleitet werden kann.

Bei einem Kraftfahrzeug, das eine Betätigungseinrichtung für ein Schiebedach oder Schiebehebedach o.dgl. hat, wird die Dachöffnung unabhängig von anderen Einrichtungen des Kraftfahrzeugs wenigstens teilweise geöffnet oder geschlossen. In gleicher Weise wird die übliche Belüftungseinrichtung bei einem Fahrzeug unabhängig von einem Fahrzeugschiebedach betätigt, d.h. geöffnet, teilweise geöffnet oder geschlossen.

So hat es sich beispielsweise gezeigt, daß die Wirkung der Belüftungseinrichtung hinsichtlich ihres Wirkungsgrades nicht immer günstig ist, da beispielsweise bei geschlossener Dachöffnung und geöffneter Belüftungseinrichtung sich Schwierigkeiten im Hinblick auf eine gedrosselte Luftausleitung aus dem Kraftfahrzeug ergeben.

Die Erfindung zielt daher darauf ab, unter Überwindung der zuvor geschilderten Schwierigkeiten, ein Verfahren zum Belüften eines Innenraums eines Kraftfahrzeugs bereitzustellen, bei dem man eine im Hinblick auf den Wirkungsgrad bessere Belüftung des Fahrzeuginnenraums erhält.

Nach der Erfindung zeichnet sich hierzu ein Verfahren zum Belüften eines Innenraums eines Kraftfahrzeugs, welches eine Belüftungseinrichtung und wenigstens eine mit Hilfe einer Betätigungseinrichtung öffen- und schließbare Dachöffnung, wie ein Schiebedach, Schiebehebedach oder dergleichen dadurch aus, daß die Belüftungseinrichtung und die Betätigungseinrichtung zum Öffnen und Schließen der Dachöffnung wirkungsmäßig derart miteinander wirkverbunden und gekoppelt werden, daß bei Erfassen einer wenigstens teilweise geöffneten Dachöffnung zur Intensivierung des Luftaustausches im Fahrzeuginnenraum die Belüftungseinrichtung eingeschaltet und/oder aufgesteuert wird.

Beim erfindungsgemäßen Verfahren wird die Belüftung des Fahrzeuginnenraumes dadurch verbessert, daß bei wenigstens teilweise geöffneter Dachöffnung die Belüftungseinrichtung eingeschaltet bzw. geöffnet wird, so daß ein verbesserter Luftaustausch im Kraftfahrzeuginnenraum erhalten wird. Über die offene Belüftungseinrichtung kann beispielsweise Frischluft einströmen, die dann über die teilweise geöffnete Dachöffnung wieder zur Umgebung hin abgegeben werden kann. Wesentlich beim erfindungsgemäßen Verfahren ist daher der Umstand, daß bei einem Kraftfahrzeug nicht die Belüftungseinrichtung und ein Schiebedach beispielsweise unabhängig voneinander betrieben werden, sondern daß diese beiden Einrichtungen eines Kraftfahrzeugs miteinander zur Optimierung des Wirkungsgrades des Lüftungssystems gekoppelt werden. Auch läßt sich einem Beschlagen der Scheiben bei feuchtkalter Witterung entgegenwirken.
Vorzugsweise wird für die Einschaltung der Belüftungseinrichtung als maßgebend die Ausstellposition eines Schiebehebedachs genommen, bei welcher die Dachöffnung wenigstens teilweise geöffnet ist. Bei einem solchen Schiebedach kann es sich um eine Schiebehebedach, um ein Spoilerdach und ein Hebedach mit einem oder mehreren Deckeln oder Deckelteilen oder auch um ein Faltdach sowie eine Kombination derartiger Dächer handeln. Durch diese Kopplung der Ausstellposition des Schiebedachs mit der Belüftungseinrichtung wird der Gasaustausch zwischen dem Innenraum und der Umgebung bei einem Kraftfahrzeug intensiviert. Natürlich kann bei der erfindungsgemäßen Verfahrensweise die Auslegung auch derart getroffen werden, daß zur Verstärkung der Wirkungsweise des Belüftungssystems des Kraftfahrzeugs bei eingeschalteter Belüftungseinrichtung die Dachöffnung wenigstens teilweise geöffnet werden kann.

Vorzugsweise umfaßt die Betätigungseinrichtung beispielsweise für das Schiebedach eine Positionsautomatik, mittels der vorbestimmte Stellungen des Schiebehebedachs erfaßbar sind, so daß in Abhängigkeit von vorbestimmten vorwählbaren Positionen des Schiebedachs die Belüftungseinrichtung nach dem erfindungsgemäßen Verfahren geöffnet wird.

Vorzugsweise kann das Verfahren ferner derart ausgelegt werden, daß die Belüftungseinrichtung und die Betätigungseinrichtung in Abhängigkeit vom Luftdurchsatz gesteuert werden. Hierbei kann der Luftdurchsatz mit Hilfe eines Sensors erfaßt werden, und die Dachöffnung sowie die Belüftungseinrichtung können dann in entsprechender Weise derart gesteuert werden, daß man den jeweils gewünschten Luftdurchsatz zwischen dem Kraftfahrzeuginnenraum und der Umgebung erhält.

Vorzugsweise werden bei dem Verfahren nach der Erfindung bei der Steuerung weitere Einflußgrößen, wie die Fahrgeschwindigkeit, der Innengeräuschpegel u.dgl. berücksichtigt. Hierdurch lassen sich wirksam solche Öffnungspositionen der Belüftungseinrichtung und/oder des Schiebedachs vermeiden, die zu unangenehmen Innengeräuschen im Fahrzeug oder zu Fahrgeräuschen führen können.

Vorzugsweise wird für das Verfahren und insbesondere zur Kopplung und/oder Steuerung von der Belüftungseinrichtung und der Betätigungseinrichtung ein Mikrocomputer verwendet, der beispielsweise von einem fahrzeugeigenen Bordcomputer gebildet werden kann. Mit Hilfe eines derartigen Mikrocomputers können dann die zu berücksichtigenden Einflußgrößen unter Optimierung derart berücksichtigt werden, daß man die gewünschte optimierte Belüftung des Fahrzeuginnenraums unter Vermeidung von störenden Nebenerscheinungen erhält. Da heutzutage in zunehmendem Maße fahrzeugeigene Bordcomputer eingesetzt werden, bereitet die Verwirklichung einer solchen Verfahrensweise keine Schwierigkeiten, da lediglich dieser fahrzeugeigene Bordcomputer in entsprechender Weise programmiert werden muß.

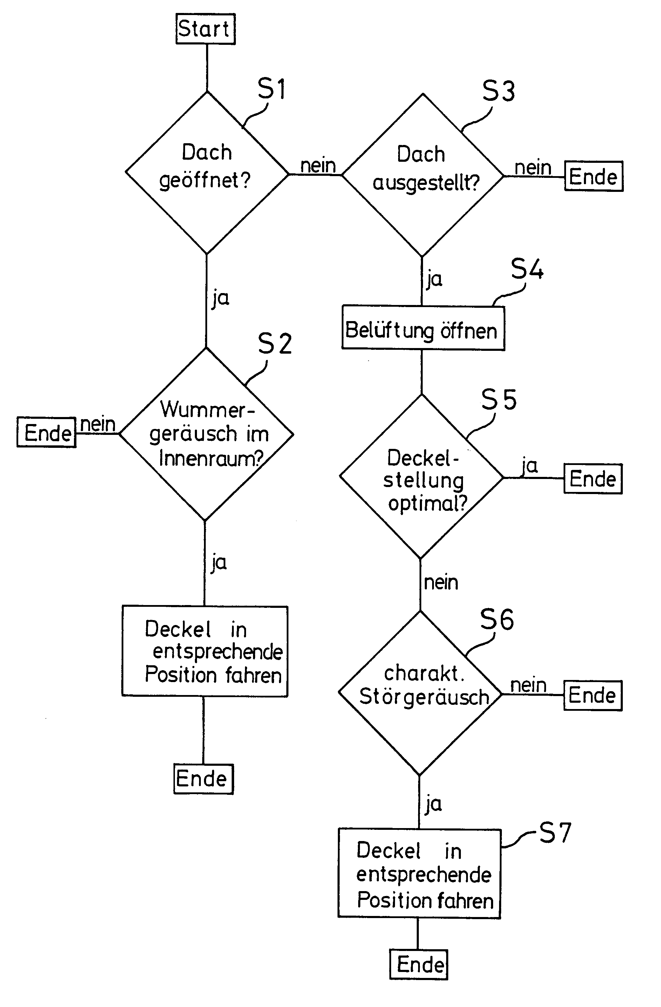

Die Erfindung wird nachstehend an einem Beispiel unter Bezugnahme auf die beigefügte Zeichnung näher erläutert.

Die einzige Figur der Zeichnung zeigt ein Flußdiagramm zur Verdeutlichung des erfindungsgemäßen Verfahrens zum Belüften des Innenraums eines Kraftfahrzeugs.

Wie aus dem Flußdiagramm nach der einzigen Figur zu ersehen ist, wird in einem ersten Schritt S1 abgefragt, ob die Dachöffnung geöffnet oder geschlossen ist. Wenn das Abfrageergebnis Ja ergibt, so wird mit Hilfe eines entsprechenden Sensors im Fahrzeuginnenraum geprüft, ob Fahrgeräusche, wie ein Wummergeräusch vorhanden sind oder nicht. Wenn das Ergebnis in diesem Abfrageschritt S2 dazu führt, daß mit Hilfe des Sensors beispielsweise kein Wummergeräusch festgestellt wird, so wird das Belüftungsverfahren nach der Erfindung beendet, und/oder es erfolgt eine Rückstellung auf den Ausgangspunkt des Flußdiagramms, der mit "Start" bezeichnet ist. Führt jedoch die Abfrage im Schritt S2 zu dem Ergebnis, daß ein Wummergeräusch im Fahrzeuginnenraum auftritt, so wird beispielsweise über die Betätigungseinrichtung für die öffen- und schließbare Dachöffnung der Deckel hinsichtlich seiner Position entsprechend verfahren, wobei der Schritt S2 hierbei mehrmals in einer Schleife durchlaufen werden kann, bis schließlich der Deckel zum Öffnen und Schlie sen der Dachöffnung eine solche Position einnimmt, daß das sogenannte Wummergeräusch im Fahrzeuginnenraum möglichst gering ist. Hierdurch erhält man eine Optimierung der Größe der Dachöffnung unter Berücksichtigung der Geschwindigkeit, der Umgebungsbedingungen des Fahrzeugs u.dgl. Wenn dann entsprechend den vorstehenden Ausführungen der Deckel des Fahrzeugdachs in die jeweils gewünschte optimale Position gebracht ist, wobei gegebenenfalls innerhalb der Schleife zwischen dem Schritt S2 und dem Verfahren des Deckels eine Zeitverzögerung in Form eines Zeitgliedes eingebaut werden kann, ist der Verfahrensablauf beendet, und gegebenenfallskann im Flußdiagtamm dann ein Rücksprung zu dem mit "Start" bezeichneten Anfang erfolgen.

Wenn sich im Schritt S1 ergibt, daß die Dachöffnung des Fahrzeugdachs nicht geöffnet ist, so wird in einem daran anschliessenden Schritt S3 geprüft, ob das Dach ausgestellt ist, d.h. ob die Dachöffnung teilweise geöffnet ist oder nicht. In Abhängigkeit von der Bauform des Fahrzeugdaches, d.h. ob es sich um ein Schiebehebedach, Spoilerdach, Hebedach mit ein oder mehreren Deckeln oder Deckelteilen oder um ein Faltdach oder eine Kombination hiervon handelt, kann dieser Schritt S3 jeweils in mehrere Unterschritte unterteilt werden. Wenn beispielsweise dem Fahrzeugdach eine Positionsautomatik zugeordnet ist, so kann es ausreichen, von der Positionsautomatik abzulesen, in welcher Stellung sich der Deckel befindet, da diese Positionsautomatik aufgrund ihrer funktionsmäßigen Bestimmung die jeweilige Deckelstellung des Dachs kennt.

Ergibt sich in diesem Schritt S3, daß das Dach nicht ausgestellt ist, so ist der im Flußdiagramm wiedergegebene programmatische Ablauf beendet, dies bedeutet, daß die Dachöffnung weder geöffnet noch der Deckel des Daches ausgestellt ist, so daß kein Luftaustausch vom Fahrzeuginnenraum über die Dachöffnung erfolgt.

Wenn sich im Schritt S3 ergibt, daß der Deckel bzw. das Dach ausgestellt ist, so wird über eine zur Verwirklichung des erfindungsgemäßen Belüftungsverfahrens des Innenraums eines Kraftfahrzeugs dienende Steuerung so betätigt, daß die Belüftungseinrichtung des Fahrzeugs geöffnet wird. Hierdurch kann der Luftaustausch in dem Fahrzeuginnenraum intensiviert und verstärkt werden, so daß man eine wirkungsvollere Belüftung des Fahrzeuginnenraums als in dem Fall erhält, wenn nur beispielsweise der Deckel des Dachs ausgestellt ist.

Alternativ zu dem bisher erläuterten erfindungsgemäßen Belüftungsverfahren des Innenraums eines Kraftfahrzeugs kann natürlich auch umgekehrt so vorgegangen werden, daß man mit Hilfe einer zugeordneten Steuerung, wie eines Mikrocomputers, der beispielsweise von einem Bordcomputer eines Kraftfahrzeugs gebildet werden kann, geprüft wird, ob die Belüftungseinrichtung geöffnet ist oder nicht. Wenn sich hierbei ergibt, daß die Belüftungseinrichtung geöffnet ist, kann dann zwangsweise entsprechend dem erfindungsgemäßen Verfahren die Dachöffnung geöffnet werden, d.h. beispielsweise der Deckel des Dachs ausgestellt werden, um die durch das Einschalten der Belüftungseinrichtung des Fahrzeugs gewünschte Innenraumbelüftung durch einen verstärkten Luftaustausch zu verbessern. Insbesondere bei der Gefahr eines Beschlagens der Scheiben des Fahrzeugs von innen, wenn beispielsweise Luft mit hoher Feuchtigkeit im Fahrzeuginnenraum vorhanden ist, kann bei einer solchen Verfahrensweise nach der Erfindung, die voranstehend geschildert worden ist, erreicht werden, daß die feuchte Luft im Fahrzeuginnenraum zur Umgebung hin ausgeleitet wird und über die geöffnete Belüftungseinrichtung des Fahrzeugs Frischluft zugeführt werden kann, so daß man einen ständigen und verstärkten Luftaustausch im Fahrzeuginnenraum erhält.

Zurückkehrend zu dem Flußdiagramm gemäß der einzigen Figur wird bei ausgestelltem Deckel des Dachs gemäß Schritt S3 und geöffneteter Belüftungseinrichtung, siehe Schritt S4, in einem weiteren Schritt S5 abgefragt, ob der Deckel unter Berücksichtigung von jeweils gewünschten Einflußgrößen, wie Störgeräuschen u.dgl. günstig oder ungünstig ist. Führt diese Abfrage im Schritt S5 zu dem Ergebnis, daß sich der Deckel bereits in seiner optimalen Position befindet, so führt das Abfrageergebnis zu "Ja" und der Verfahrensablauf ist beendet.

Treten hingegen im Schritt S5 Störgeräusche u.dgl. auf, so nimmt der Deckel im Schritt S5 nicht seine optimale Stellung ein, und in einem weiteren, sich hieran anschließenden Schritt S6 werden die Störgeräusche hinsichtlich ihrer Charakteristika qualifiziert. Mit Hilfe dieser Qualifizierung im Schritt S6 kann dann festgestellt werden, auf welche Ursachen diese Störgeräusche gegebenenfalls zurückzuführen sind.

In einem weiteren sich daran anschließenden Schritt S7 wird dann der Deckel in entsprechender Weise so verfahren, daß sich eine Geräuschminimierung im Fahrzeuginnenraum erzielen läßt. Diese Verstellung des Deckels im Schritt S7 kann gegebenenfalls auch verzögert erfolgen, um eine ständige Positionsveränderung des Deckels bei dem Steuerungsablauf zu vermeiden, und um insbesondere zu verhindern, daß beispielsweise durch Außenwindverhältnisse bedingte, kurzzeitige Störgeräusche, nicht zu entsprechenden Deckelpositionsveränderungen führen, sondern im wesentlichen keinen Einfluß auf den Verfahrensablauf haben.

Wenn dann im Schritt S7 die optimale Position des Deckels eingestellt ist und gemäß dem Schritt S4 die Belüftungseinrichtung des Fahrzeugs geöffnet ist, wird eine optimale Belüftung des Fahrzeuginnenraums bei möglichst minimalen Fahrzeuginnenraumgeräuschen erzielt. Der Verfahrensablauf des erfindungsgemäßen Belüftungsverfahrens eines Innenraums eines Kraftfahrzeugs ist dann abgeschlossen.

Selbstverständlich ist das erfindungsgemäße Verfahren nicht auf die Einzelheiten des Flußdiagramms, die anhand der einzigen Figur dargestellt sind, beschränkt, sondern es sind zahlreiche Abänderungen und Modifikationen möglich, die der Fachmann im Bedarfsfall treffen wird, ohne den Erfindungsgedanken zu verlassen.

So ist beispielsweise anstelle der dargestellten automatischen Durchführung des Verfahrensablaufes auch eine manuelle Durchführung möglich, so daß der Fahrer des Fahrzeugs beispielsweise entsprechend den jeweils herrschenden Außenbedingungen den Deckel des Fahrzeugdachs ausstellen oder teilweise bzw. vollständig die Dachöffnung öffnen kann, so daß man beispielsweise kurzfristig nach einem Stehen des Fahrzeugs und Sonneneinstrahlung einen verstärkten Luftaustausch zwischen Fahrzeuginnenraum und Außenumgebung vornehmen kann, um den Fahrkomfort kurzzeitig und schnell wirkend zu verbessern. Ganz generell ist es aber bei dem erfindungsgemäßen Belüftungsverfahren wesentlich, daß die bei an sich bekannten Fahrzeugen getrennt voneinander vorhandenen Einrichtungen, wie Belüftungseinrichtung und Schiebehebedach beispielsweise, welche ebenfalls gesondert betätigt und gesteuert werden können, in einen Wirkzusammenhang durch eine kombinatorische Verknüpfung dieser beiden Einrichtungen gebracht werden, um die Belüftung des Fahrzeuginnenraums wirkungsgradmäßig zu optimieren.

## Patentansprüche

1. Verfahren zum Belüften eines Innenraums eines Kraftfahrzeugs, welches eine Belüftungseinrichtung und wenigstens eine mit Hilfe einer Betätigungseinrichtung öffen-und schließbare Dachöffnung, wie ein Schiebedach, Schiebehebedach oder dergleichen, aufweist, dadurch **gekennzeichnet,** daß die Belüftungseinrichtung und die Betätigungseinrichtung zum Öffnen und Schließen der Dachöffnung wirkungsmäßig derart miteinander verbunden und gekoppelt werden, daß bei Erfassen einer wenigstens teilweise geöffneten Dachöffnung zur Intensivierung des Luftaustausches im Fahrzeuginnenraum die Belüftungseinrichtung eingeschaltet und/oder aufgesteuert wird.

2. Verfahren nach Anspruch 1, dadurch gekennzeichnet, daß man die teilweise geöffnete Dachöffnung in der Ausstellposition eines Schiebedachs, wie Schiebehebedachs, Spoilerdachs, Hebedachs mit ein oder mehreren Deckeln oder Deckelteilen oder eines Faltdachs oder einer Kombination hiervon erhält.

3. Verfahren nach Anspruch 1 oder 2, dadurch gekennzeichnet, daß die Betätigungseinrichtung eine Positionsautomatik umfaßt.

4. Verfahren nach einem der Ansprüche 1 bis 3, dadurch gekennzeichnet, daß die Belüftungseinrichtung und die Betätigungseinrichtung in Abhängigkeit vom Luftdurchsatz gesteuert werden.

5. Verfahren nach Anspruch 4, dadurch gekennzeichnet, daß bei der Steuerung weitere Einflußgrößen, wie Fahrgeschwindigkeit, Innengeräuschpegel o.dgl. berücksichtigt werden.

6. Verfahren nach einem der vorangehenden Ansprüche, dadurch gekennzeichnet, daß die Kopplung und/oder Steuerung von Belüftungseinrichtung und Betätigungseinrichtung mittels eines Mikrocomputers vorgenommen werden.

7. Verfahren nach Anspruch 6, dadurch gekennzeichnet, daß der Mikrocomputer ein fahrzeugeigener Bordcomputer ist.

## Claims

1. A method of ventilating an interior of a motor vehicle which comprises a ventilating device and at least one roof opening such as a sliding roof, sliding- lifting roof or the like which can be opened and closed by means of an actuating device, characterised in that the ventilating device and the actuating device for opening and closing the roof opening are so operatively connected and coupled to each other that upon ascertaining an at least partially opened roof opening it is possible to switch on and/or boost the performance of the ventilating device in order to intensify the exchange of air in the vehicle interior.

2. A method according to Claim 1, characterised in that the partially opened roof opening in the extended position of the sliding roof, such as a sliding-lifting roof, spoiler roof, lifting roof is achieved with one or more covers or cover parts or a folding roof or a combination thereof.

3. A method according to Claim 1 or 2, characterised in that the actuating device comprises an automatic position sensor.

4. A method according to one of Claims 1 to 3, characterised in that the ventilating device and the actuating device are controlled as a function of the rate of air throughput.

5. A method according to Claim 4, characterised in that further input variables such as travelling speed, interior noise level or the like are taken into account in the control cycle.

6. A method according to one of the preceding Claims, characterised in that the coupling and/or controlling of ventilating device and actuating device are undertaken by a microcomputer.

7. A method according to Claim 6, characterised in that the microcomputer is an on-board computer present in the vehicle.

## Revendications

1. Procédé d'aération de l'intérieur d'un véhicule, comportant un dispositif d'aération et au moins un toit ouvrant, tel qu'un toit coulissant ou un toit coulissant et basculant dont l'ouverture et la fermeture sont assurées par un dispositif de manoeuvre, caractérisé en ce que le dispositif d'aération et le dispositif de manoeuvre sont, en ce qui concerne l'ouverture et la fermeture du toit, reliés fonctionnellement et couplés de manière que la détection d'une ouverture même partielle du toit provoque la mise en service et/ou la commande du dispositif d'aération afin d'intensifier le renouvellement de l'air à l'intérieur du véhicule.

2. Procédé selon la revendication 1, caractérisé en ce que l'ouverture partielle du toit correspond à la position de relevage d'un toit coulissant, tel qu'un toit coulissant et basculant, un toit coupe-vent, un toit à relevage comprenant un ou plusieurs volets ou éléments de volets, ou un toit repliable ou une combinaison de ces dispositions.

3. Procédé selon la revendication 1 ou 2, caractérisé en ce que le dispositif de manoeuvre est un automatisme de positionnement.

4. Procédé selon l'une des revendications 1 à 3, caractérisé en ce que le dispositif d'aération et le dispositif de manoeuvre sont commandés en fonction du débit d'air.

5. Procédé selon la revendication 4, caractérisé en ce que la commande prend en compte d'autres paramètres intervenants, tels que la vitesse du véhicule, le niveau sonore à l'intérieur du véhicule, etc.

6. Procédé selon l'une des revendications précédentes, caractérisé en ce que le couplage et/ou la commande des dispositifs d'aération et de manoeuvre sont assurés par un micro-ordinateur.

7. Procédé selon la revendication 6, caractérisé en ce que le micro-ordinateur est l'ordinateur de bord propre au véhicule.
